# EUROPEAN PATENT SPECIFICATION

(11) **EP 1 872 617 B1**
(45) Date of publication and mention of the grant of the patent: **04.12.2013**
(21) Application number: 06740711.4
(22) Date of filing: 04.04.2006
(51) Int. Cl.: H04Q 11/00, H04M 3/56

(54) **MANAGEMENT OF MISSING CONFERENCE INVITEES**
VERWALTUNG FEHLENDER KONFERENZTEILNEHMER
GESTION DES INVITES ABSENTS A UNE CONFERENCE

(30) Priority: 22.04.2005 US 112211
(43) Date of publication of application: 02.01.2008
(73) Proprietor: Cisco Technology, Inc., San Jose, CA 95134-1706 (US)
(72) Inventor: PIRZADA, Shamim, S., San Jose, California 95135 (US); JENNINGS, Cullen, F., Calgary, AB, T3C 2H1 (CA)
(74) Representative: Kazi, Ilya
(86) International application number: PCT/US2006/013028
(87) International publication number: WO 2006/115730

(56) References cited:
- WO-A-03/055188
- US-A1- 2003 158 900
- US-A1- 2004 235 520
- US-B1- 6 801 610

## Description

### TECHNICAL FIELD OF THE INVENTION

The present invention relates generally to conference management, and more particularly to management of an ongoing conference through the display of missing invitees and the use of ongoing conference notifications.

### BACKGROUND OF THE INVENTION

There are many methods available for groups of individuals to engage in conferencing. One common method, teleconferencing, involves one or more individuals located in one location engaging in a conference telephone call with one or more individuals located in at least one other location, remote from the first. Often teleconferencing involves the use of one or more speaker phones. Similarly, video conferencing, web conferencing, data conferencing, online meetings, and other technologies provide methods for multiple individuals to meet and communicate ideas and information from remote locations.

US 6801610 discloses a method for establishing a conference call, involving receiving conference call setup information and initiating the conference call in accordance with the conference call setup information.

### SUMMARY OF THE INVENTION

Aspects of the invention are set out in the independent claims. Certain preferred features are set out in the dependent claims.

In accordance with the present invention, techniques for managing an ongoing conference are provided. According to some embodiments, these techniques can enable a conference administrator to display information about missing conference attendees, including their network presence status, schedules, and contact information. These techniques may also allow the conference administrator to notify one or more missing conference invitees of the scheduled conference, while the conference is ongoing, through one or more communication devices associated with each missing conference invitee.

According to a particular embodiment, a system for managing an ongoing conference includes a database, a processing module, a graphical user interface, and a network interface. The database includes conference invitee information, invitee communication addresses, and invitee notification logic. The processing module is able to access the database, identify a plurality of conference invitees for a scheduled conference, and monitor a communication session established for the scheduled conference. The processing module is also able to identify one or more conference attendees participating in the communication session, identify one or more missing conference invitees, identify one or more communication addresses for the missing conference invitees, and receive a notification selection, indicating one or more selected ones of the communication addresses. The graphical user interface is able to present, for each of the missing conference invitees, contact options linked to the one or more communication addresses; and the network interface is operable to send an ongoing conference notification to the selected communication addresses.

Embodiments of the invention provide various technical advantages. For example, these techniques may allow a conference administrator to view a graphical display representing contact information and presence status for each missing conference invitee during a scheduled meeting. These techniques may also allow the conference administrator to send a notification to one or more of the missing conference invitees, notifying them of the ongoing meeting and providing them with information to assist them in joining the ongoing conference. This may serve as a reminder to conference invitees who may have forgotten about the conference. Additionally, these techniques may allow a conference administrator to contact multiple missing conference invitees simultaneously using one or more communication addresses for each missing conference invitee, while the conference is ongoing. These techniques may also allow a conference invitee to connect to the ongoing conference in response to a notification. This may allow the conference invitee to connect to the conference using one or more of multiple communication devices, which may circumvent certain technical problems which prevented the conference invitee from initially being included in the conference. Furthermore, by sending out an ongoing conference notification, certain conference attendees, who were previously unable to agree to the conference time, may connect to the ongoing conference in response to receiving the notification, as a result of a change or opening in their schedules.

Other technical advantages of the present invention will be readily apparent to one skilled in the art from the following figures, descriptions, and claims. Moreover, while specific advantages have been enumerated above, various embodiments may include all, some, or none of the enumerated advantages.

### BRIEF DESCRIPTION OF THE DRAWINGS

For a more complete understanding of the present invention and its advantages, reference is now made to the following description, taken in conjunction with the accompanying drawings, in which:
FIGURE 1 illustrates a system having elements to support the management of an ongoing conference;
FIGURE 2 illustrates example communication devices associated with conference attendees and missing conference invitees;
FIGURE 3 is a block diagram illustrating functional components of a conference management module associated with the conference management system;
FIGURE 4 illustrates a graphical user interface for managing an ongoing conference; and
FIGURE 5 is a flowchart illustrating a method for managing an ongoing conference.

### DETAILED DESCRIPTION OF THE DRAWINGS

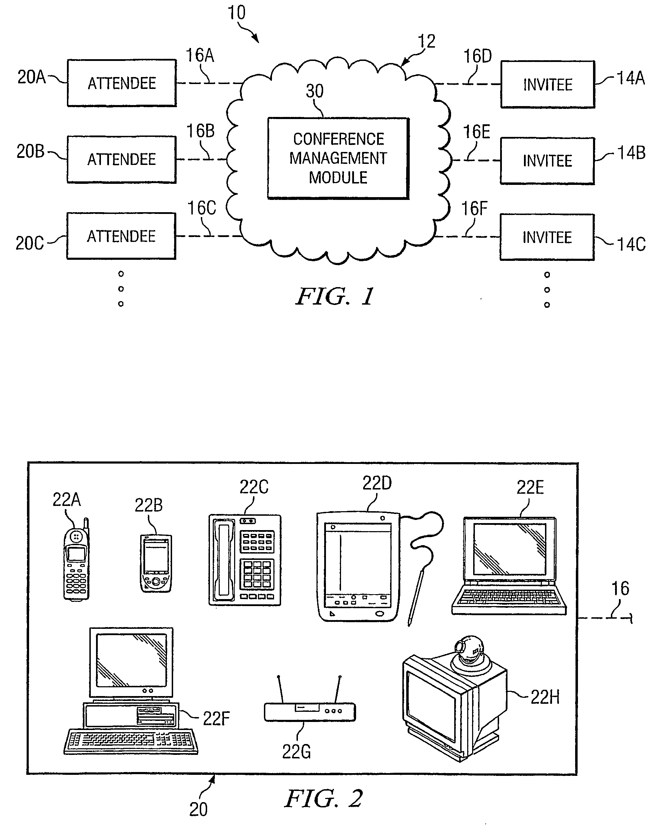

FIGURE 1 illustrates a conference management system, indicated generally at 10, that includes network 12, conference attendees 20, missing conference invitees 14, network connections 16, and conference management module 30. The elements of conference management system 10 can operate to enable a conference administrator to manage an ongoing conference.

Network 12 represents communication equipment, including hardware and any appropriate controlling logic, for interconnecting elements coupled to network 12. Thus network 12 may represent a local area network (LAN), a metropolitan area network (MAN), a wide area network (WAN), and/or any other appropriate form of network. Furthermore, elements within network 12 may utilize circuit-switched and/or packet-based communication protocols to provide for network communications. The elements within network 12 may be connected together via a plurality of fiber-optic cables, coaxial cables, twisted-pair lines, and/or other physical media for transferring communications signals. The elements within network 12 may also be connected together through wireless transmissions, including infrared transmissions, 802.11 protocol transmissions, laser line-of-sight transmissions, or any other wireless transmission method.

Conference attendee 20 represents one or more individuals or groups of individuals who are present for a scheduled conference. The presence of conference attendee 20 may consist of being connected to a teleconference via a deskphone, a cellular phone, a speaker phone located in a conference room, or any other voice communication device capable of connecting conference attendee 20 to a teleconference. The presence of conference attendee 20 may also consist of being connected to a web conference via a laptop, desktop computer, television set-top box, tablet computer, personal digital assistant, or any other communication device capable of connecting conference attendee 20 to a web conference. Multiple conference attendees 20 may be co-located during the conference, or each conference attendee 20 may be located in a separate location. In addition, conference attendee 20 may be in a stationary location during the conference, or conference attendee 20 may be using a mobile communication device 22 and their location may change during the conference. Furthermore, conference attendee 20 may connect to the scheduled conference using more than one communication device during the conference. For example, conference attendee 20 may begin the conference using a cellular phone to connect to the conference and then transition to a desktop telephone or a desktop computer while the conference is still ongoing. While it is not necessary, one of the conference attendees 20 may also be the conference administrator for the scheduled conference.

Missing conference invitee 14 represents one or more individuals or groups of individuals who have been invited to a scheduled conference, but who are not present during the scheduled conference. Associated with each missing conference invitee 14 or group of missing conference invitees 14 are one or more communication devices.

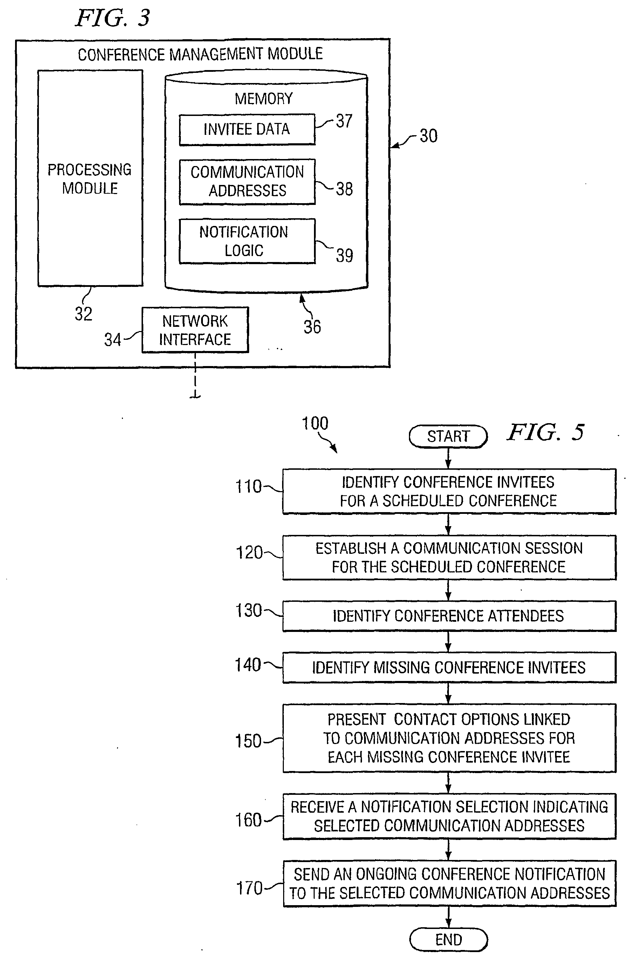

Conference management module 30 represents hardware and controlling logic for managing an ongoing conference. Conference management module 30 may operate to schedule a conference and establish a communication session for the scheduled conference. Conference management module 30 may also operate to identify conference attendees 20 and missing conference invitees 14, and may operate to send ongoing conference notifications to missing conference invitees 14. Further description of conference management module 30 is included below in relation to FIGURE 3.

Network connection 16, represents hardware for connecting network 12 to other elements of conference management system 10. Network connection 16 may include fiber optic cable, twisted pair cable, coaxial cable, or any physical media adapted to allow the transmission of communication signals between network 12 and the other elements of conference management system 10. Network connection 16 may also represent one or more wireless connections using technologies such as infrared transmissions, 802.11 protocol transmissions, laser line-of-sight transmission, etc. Additionally, network connection 16 may include one or more external networks, such as the public switched telephone network (PSTN), private networks and/or the Internet. Although not explicitly shown in FIGURE 1, elements of conference management system 10 may couple directly to network 12, without the use of network connections 16.

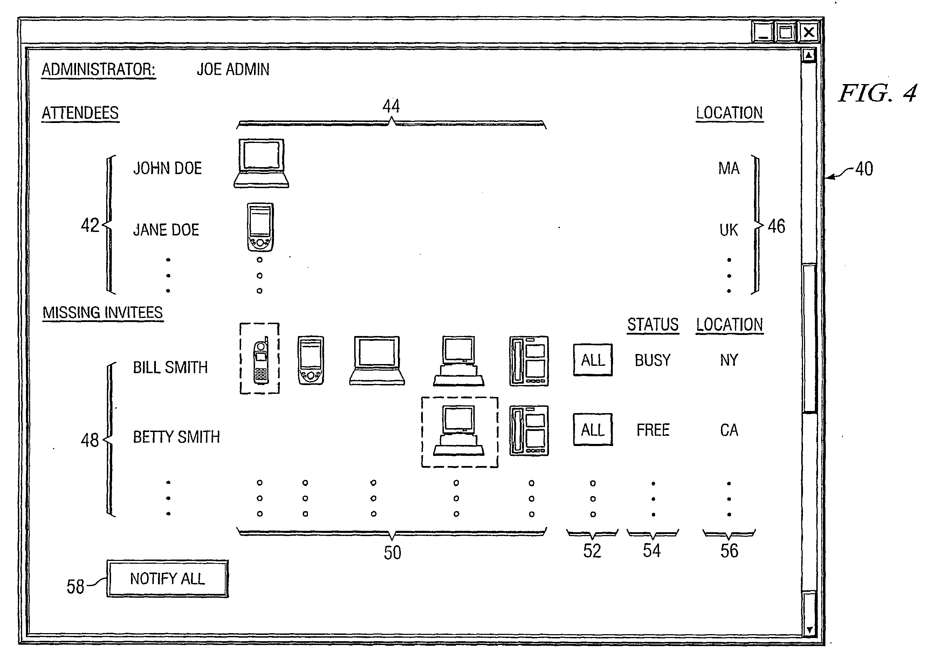

In operation, conference management module 30 maintains information regarding invitees for a scheduled conference. This information may include communication addresses, presence information, schedules, etc. When the time for the scheduled conference occurs, one or more conference invitees connect to establish a communication session for the scheduled conference. The communication session may be a teleconference, a video conference, a web conference, a data conference, or any other conferencing technology which provides for remote communications between a plurality of individuals or groups of individuals. Once the communication session has been established, conference management module 30 identifies conference attendees 20 and missing conference invitees 14. Conference management module 30 may then present a graphical user interface which includes information regarding conference attendees 20 and missing conference invitees 14. An illustration of one embodiment of the graphical user interface is shown in FIGURE 4, and further description of the graphical user interface is included below in relation to FIGURE 4.

A conference administrator can use the graphical user interface to select one or more missing conference invitees 14. For each selected missing conference invitee 14, the conference administrator can select one or more communication devices through which to contact missing conference invitee 14. Conference management module 30 may then generate one or more ongoing conference notifications and send the one or more ongoing conference notifications to the selected communication devices for the selected missing conference attendees 14. The ongoing conference notifications may be customized for each type of communication device and/or customized for each missing conference invitee 14. For example, the ongoing conference notification may be a recorded or simulated voice message reminding missing conference invitee 14 of the ongoing scheduled conference. The ongoing conference notification may also be an e-mail message, an instant message, an application driven pop-up window, or any other notification technology capable of communicating the existence and ongoing nature of the scheduled conference, in substantially real-time.

In one embodiment, the ongoing call notification would provide a method for missing conference invitee 14, upon receiving the ongoing call notification, to join the ongoing conference. As one example, if the ongoing call notification were received on a cellular phone, the ongoing call notification might provide a number that missing conference invitee 14 could call to join the ongoing conference. As another example, the ongoing call notification may be in the form of a call that, if answered, can be linked to the conference. In this embodiment, the ongoing call notification may be in the form of an interactive voice response system that can link conference invitee to the ongoing conference upon receiving a specified response. As yet another example, if the ongoing call notification were an e-mail, the email message might contain a link to the ongoing conference.

FIGURE 2 illustrates communication devices 22 that may be associated with a system user, such as conference attendee 20 or missing conference invitee 14. Communication devices 22 represent one or more of a plurality of hardware devices capable of transmitting electronic communication signals through network 12. Communication devices 22 may represent portable or fixed location devices capable of transmitting communication signals through one or more appropriate wireless or wireline protocols. For example, communication devices 22 may include cellular phones 22A, personal digital assistants 22B, desktop phones 22C, tablet computers 22D, laptop computers 22E, desktop computers 22F, video conferencing systems 22G, television set-top boxes 22H, etc. Additionally, communication devices 22 may connect using one or more mobile communication technologies, such as global systems for mobile communications (GSM) and/or code division multiple access (CDMA). Furthermore, communication devices 22 may support packet based protocols such as Internet protocol (IP) and wireless standards such as the 802.11 family of wireless standards. In certain embodiments, attendee 20 may be associated with numerous communication devices 22, all of which transmit communication signals through network 12. Similarly, missing conference invitee 14 may be associated with numerous communication devices 22, all of which transmit communication signals through network 12.

In operation, conference attendee 20 and missing conference invitee 14 connect to network 12 through one or more communication devices 22. Conference attendee 20 may join a conference using one or more communication devices 22. Similarly, missing conference invitee 14 may receive an ongoing conference notification through one or more communication devices 22.

FIGURE 3 is a block diagram illustrating functional components of conference management module 30. In the embodiment illustrated, conference management module 30 includes processor module 32, network interface 34, and memory 36. These components operate to enable conference management module 30 to manage an ongoing conference and to notify missing conference invitees 14 of the ongoing conference.

Processor module 32 controls the operation and administration of elements within conference management module 30 by processing information received from network interface 34 and memory 36. Processor module 32 includes any hardware and/or controlling logic elements operable to control and process information. For example, processor 32 may be a programmable logic device, a microcontroller, and/or any other suitable processing device or group of devices.

Network interface 34 communicates information to and receives information from devices coupled to conference management module 30. For example, network interface 34 may communicate with communication devices 22, network 12, and elements coupled to network 12. Thus network interface 34 includes any suitable hardware and/or controlling logic used to communicate information to and from elements coupled to conference management module 30.

Memory 36 stores, either permanently or temporarily, data and other information for processing by processor module 32 and communication using network interface 34. Memory 36 includes any one or a combination of volatile or nonvolatile local or remote devices suitable for storing information. For example, memory 36 may include random access memory (RAM), read only memory (ROM), magnetic storage devices, optical storage devices, or any other suitable information storage device or combination of these devices.

Memory 36 may store, among other things, conference invitee data 37, invitee communication addresses 38, and invitee notification logic 39. Conference invitee data 37 includes information related to conference invitees, such as names, preferences, primary locations, etc. Invitee communication addresses 38 include the addresses for communication devices 22 associated with conference invitees. Invitee communication addresses 22 may include phone numbers, e-mail addresses, network identifiers, port addresses, or any other information necessary to transmit an ongoing conference notification to each of the communication devices 22 associated with a conference invitee. Invitee communication addresses 22 may be used by conference management module 30 to establish the communication session for the scheduled conference and/or to send ongoing conference notifications to missing conference invitees 14.

Invitee notification logic 39 includes code, executable files, and/or appropriate software modules capable, when executed, of controlling the operation of conference management module 30 as it relates to generating and sending ongoing conference notifications. Invitee notification logic includes logic necessary to identify missing conference invitees, present contact options linked to the one or more communication addresses for each missing conference invitee 14, generate ongoing conference notifications and send the ongoing conference notifications to selected communication addresses.

In operation conference management module 30 receives a selection from a conference administrator and applies invitee notification logic 39 to create ongoing conference notifications and send these ongoing conference notifications to each selected communication address.

FIGURE 4 illustrates graphical user interface 40. Graphical user interface 40 represents one possible method for conference management module 30 to present contact options and to receive a notification selection. As shown, graphical user interface 40 includes attendee list 42, attendee device indicators 44, and attendee location indicators 46. In addition, graphical user interface 40 includes missing invitee list 48, invitee device indicators 50, invitee 'select all' buttons 52, invitee status indicators 54, invitee location indicators 56, and notification action button 58.

In operation, a conference administrator may use graphical user interface 40 to control the operation of conference management module 30, with respect to the notification of missing conference invitees 14 regarding an ongoing conference. The appearance and content of graphical user interface 40 may be controlled by conference management module 30.

Attendee list 42 represents the one or more conference attendees 20, present at the ongoing conference. Attendee list 42 may include a list of names, titles, and/or associated entities. Attendee list 42 may also include icons and/or other graphical or textual displays indicating the conference attendees 20 present at the ongoing conference. Adjacent to attendee list 42 are attendee device indicators 44. As shown, attendee device indicators 44 include icons representing the type of communication device 22 each conference attendee 20 is using to attend the ongoing conference. In the example shown, conference attendees 20 are attending the ongoing conference through the use of a laptop computer and a personal digital assistant. In other embodiments, attendee device indicator 44 may include other forms of graphical or textual indicators that may represent the type of communication device 22 each conference attendee 20 is using to attend the ongoing conference. In addition, graphical user interface 40 may include attendee location indicators 46. Attendee location indicators 46 represent icons and/or other graphical or textual representations indicating the current location of each individual or group of conference attendees 20. The precision of attendee location indicators 46 may vary from one embodiment to another. For example, in one embodiment, attendee location indicator 46 may indicate the conference room where conference attendee 20 is located. While in other embodiments, attendee location indicator 46 may indicate which city, state, country, and/or international time zone where attendee 20 is located. Attendee location indicator 46 may also indicate the local time where conference attendee 20 is located.

In operation, graphical user display 40 will provide information to the conference administrator regarding conference attendees 20 through the use of attendee list 42, attendee device indicators 42, and attendee location indicators 46. These elements of graphical user display 40 may provide real-time or near-real-time information regarding all conference attendees 20.

Missing invitee list 48 represents the one or more missing conference invitees 14 not present at the ongoing conference. As with attendee list 42, missing invitee list 48 may include a list of names, titles, and/or associated entities. Missing invitee list 48 may also include icons and/or other graphical or textual displays indicating the missing conference invitees 14 not present at the ongoing conference. Adjacent to missing invitee list 48 are invitee device indicators 50. Invitee device indicators 50 represent indicators of the different communication devices 22 associated with each missing conference invitee 14. As shown, one or more invitee device indicators 50 may be highlighted and/or set apart to indicate an online presence status and/or a preference indication for those communication devices 22.

In one embodiment, the conference administrator may select one or more communication devices 22 by selecting the appropriate invitee device indicator 50. Conference management module 30 will then generate and send ongoing conference notifications to those communication devices 22 associated with the selected invitee device indicators 50. In addition, in the embodiment shown, graphical user interface 40 includes invitee 'select-all' buttons 52, which may be used by the conference administrator to select all of the communication devices 22 associated with the selected missing conference invitees 14. By activating invitee 'select-all' button 52, the conference administrator may communicate, to the conference management module, a selection of all of the communication devices 22 associated with a certain missing conference invitee 14. The conference management module 30 may then generate and send ongoing conference notifications to each of those selected communication devices 22.

Invitee status indicator 54 represents additional status information regarding missing conference invitee 14. For example, invitee status indicator 54 may indicate the network presence of missing conference invitee 14. In this embodiment conference management module 30 may access information from one or more applications or databases to determine whether missing conference invitee 14 is present or not present with respect to network 12. Invitee status indicator 54 may also indicate a scheduling status of missing conference invitee 14. In this embodiment, conference management module 30 may access information from one or more scheduling applications or databases, such as OUTLOOK, to determine whether missing conference invitee 14 is free, busy, out-of-the-office, etc.

Similar to attendee location indicators 46, invitee location indicators 56 represent icons and/or other graphical or textual representations indicating the current location of each individual or group of missing conference invitees. Invitee location indicator 56 may display information indicating the conference room, city, state, country, and/or international time zone where missing conference invitee 14 is located. In one embodiment, invitee location indicator 56 indicates the local time where missing conference invitee 14 is located.

Notification action button 58, as shown, represents a simplified method for the conference administrator to communicate the selection of all missing conference invitees 14 to conference management module 30. In one embodiment, activation of notification action button 58 may result in the selection of each communication device 22 associated with each missing conference invitee 14. In another embodiment, activation of notification action button 58 may result in the selection of a preferred communication device 22 associated with each missing conference attendee. The preferred communication device may be determined based on information provided by the conference administrator, upon preferences established by the missing conference invitees 14, upon the most recent device used by a missing conference invitee 14, upon network presence information for the communication devices 22, or other appropriate criteria.

FIGURE 5 is a flowchart illustrating a method, indicated generally at 100, for managing an ongoing conference. Conference management module 30 identifies conference invitees for a scheduled conference at step 110, and then establishes a communication session for the scheduled conference at step 120. At step 130, conference management module 30 identifies conference attendees 20 and, at step 140, identifies missing conference invitees 14. Then, at step 150, conference management module 30 presents contact options linked to communication addresses for each missing conference invitee 14. At step 160, conference management module 30 receives a notification selection indicating selected communication addresses. In response to the selection, at step 170, conference management module 30 sends an ongoing conference notification to the selected communication addresses.

Thus, method 100 represents a series of steps for managing an ongoing conference. Method 100 represents an example of one mode of operation, and conference management system 10 contemplates devices using suitable techniques, elements, and applications for performing this mode of operation. Many of the steps in the flowchart may take place simultaneously and/or in a different order than shown. In addition, the devices may use any methods with additional or fewer steps to manage an ongoing conference call.

Although the present invention has been described in several embodiments, a myriad of changes and modifications may be suggested to one skilled in the art, and it is intended that the present invention encompass such changes and modifications as fall within the present appended claims.

## Claims

1. A system (30) for managing an ongoing conference comprising:
means for identifying a plurality of conference invitees for a scheduled conference for which an ongoing communication session has been established;
means for monitoring the ongoing communication session established for the scheduled conference;
means for identifying one or more missing ones (14A-14C) of the conference invitees not participating in the ongoing communication session;
means for determining, for each of the missing conference invitees, one or more associated communication addresses;
means for presenting, for each of the missing conference invitees, at least one contact option (50) linked to the communication addresses;
means for receiving a notification selection indicating one or more selected ones of the contact options; and
means for sending an ongoing conference notification to the communication addresses linked to the selected contact options.

2. The system of Claim 1, wherein the system is further operable to present a graphical user interface (40) displaying, for each of the missing conference invitees, the contact options (50) linked to the one or more identified communication addresses.

3. The system of Claim 2, wherein displaying comprises visually presenting a plurality of icons each linked to a selected one of the contact options.

4. The system of Claim 1, wherein the system is further operable to determine a presence status for each of the missing conference invitees, wherein each presence status indicates an availability of a network device associated with the communication address for the missing conference invitee, and present the presence status (54) for each of the missing conference invitees.

5. The system of Claim 1, wherein the system is further operable, for each of the missing conference attendees, to access scheduling software for the missing conference invitee, to determine schedule information indicating scheduled activities for the conference invitee, and to present the schedule information.

6. The system of Claim 5, wherein the schedule information comprises calendar entries from a commercially available software application.

7. The system of Claim 1, wherein:
the system is further operable to present an option (58) to contact all of the missing conference invitees and to receive a selection of the option to contact all of the missing conference invitees; and
the system is further operable to send an ongoing conference notification to at least one of the communication addresses for each of the missing conference invitees.

8. A system according to claim 1, further comprising:
a database (36) maintaining a plurality of conference profiles, each scheduled conference profile identifying schedule information, a plurality of conference invitees (37) and, for each of the conference invitees, at least one communication address (38).

9. A system according to claim 8, further comprising:
means for selecting one of the conference profiles;
means for identifying the conference invitees for the selected conference profile;
means for monitoring the communication session established for the selected conference profile; and
means for determining the communication addresses for missing conference invitees from the conference profile.

10. A method for managing an ongoing conference comprising:
identifying a plurality of conference invitees for a scheduled conference for which an ongoing communication session has been established;
monitoring the ongoing communication session established for the scheduled conference;
identifying one or more missing ones (14A-14C) of the conference invitees not participating in the ongoing communication session;
determining, for each of the missing conference invitees, one or more associated communication addresses;
presenting, for each of the missing conference invitees, at least one contact option (50) linked to the communication addresses;
receiving a notification selection indicating one or more selected ones of the contact options; and
sending an ongoing conference notification to the communication addresses linked to the selected contact options.

11. The method of Claim 10, further comprising presenting a graphical user interface (40) displaying, for each of the missing conference invitees, the contact options (50) linked to the one or more identified communication addresses.

12. The method of Claim 10, wherein presenting comprises visually displaying icons representing each of the contact options.

13. The method of Claim 10, further comprising determining a presence status for each of the missing conference invitees, wherein each presence status indicates an availability of a network device associated with the communication address for the missing conference invitee, and presenting the presence status (54) for each of the missing conference invitees.

14. The method of Claim 10, further comprising, for each of the missing conference attendees, accessing scheduling software for the missing conference invitee, determining schedule information indicating scheduled activities for the conference invitee, and presenting the schedule information.

15. The method of Claim 14, wherein the schedule information comprises calendar entries from a commercially available software application.

16. The method of Claim 10, further comprising;
presenting an option (58) to contact all of the missing conference invitees;
receiving a selection of the option to contact all of the missing conference invitees; and
sending an ongoing conference notification to at least one of the communication addresses for each of the missing conference invitees.

17. Software for managing an ongoing conference, the software embodied in computer-readable media and when executed operable to perform a method according to any of claims 10 to 16.

## Patentansprüche

1. System (30) zum Verwalten einer laufenden Konferenz, das Folgendes umfasst:
Mittel zur Identifizierung einer Vielzahl von Konferenzgästen für eine geplante Konferenz, für die eine laufende Kommunikationssitzung eingerichtet wurde;
Mittel zur Überwachung der laufenden Kommunikationssitzung, die für die geplante Konferenz eingerichtet wurde;
Mittel zur Identifizierung eines oder mehrerer fehlender Konferenzgäste (14A-14C), die nicht an der laufenden Kommunikationssitzung teilnehmen;
Mittel zum Ermitteln einer oder mehrerer zugehöriger Kommunikationsadressen für jeden der fehlenden Konferenzgäste;
Mittel zur Präsentation mindestens einer Kontaktoption (50), die mit den Kommunikationsadressen verknüpft ist, für jeden der fehlenden Konferenzgäste;
Mittel zum Empfang einer Benachrichtigungsauswahl, die eine oder mehrere ausgewählte Kontaktoptionen anzeigt, und
Mittel zum Senden einer Benachrichtigung über eine laufende Konferenz zu den Kommunikationsadressen, die mit den ausgewählten Kontaktoptionen verknüpft sind.

2. System nach Anspruch 1, wobei das System ferner eine grafische Benutzeroberfläche (40) darstellen kann, die für jeden der fehlenden Konferenzgäste die Kontaktoptionen (50) anzeigt, die mit der einen oder den mehreren identifizierten Kommunikationsadressen verknüpft sind.

3. System nach Anspruch 2, wobei das Anzeigen die visuelle Darstellung einer Vielzahl von Symbolen umfasst, die jeweils mit einer ausgewählten Kontaktoption verknüpft sind.

4. System nach Anspruch 1, wobei das System ferner einen Anwesenheitsstatus für jeden der fehlenden Konferenzgäste ermitteln kann, wobei jeder Anwesenheitsstatus eine Verfügbarkeit einer Netzwerkvorrichtung, die der Kommunikationsadresse für den fehlenden Konferenzgast zugeordnet ist, anzeigt und den Anwesenheitsstatus (54) für jeden der fehlenden Konferenzgäste anzeigt.

5. System nach Anspruch 1, wobei das System ferner für jeden der fehlenden Konferenzteilnehmer Folgendes ausführen kann: Zugreifen auf eine Terminplanungssoftware für den fehlenden Konferenzgast, Ermitteln von Terminplaninformationen, die die geplanten Aktivitäten des Konferenzgasts anzeigen, und Darstellen der Terminplaninformationen.

6. System nach Anspruch 5, wobei die Terminplaninformationen Kalendereinträge aus einer im Handel erhältlichen Software-Anwendung umfassen.

7. System nach Anspruch 1, wobei:
das System ferner eine Option (58) zum Kontaktieren aller fehlender Konferenzgäste darstellen kann und eine Auswahl der Option zum Kontaktieren aller fehlender Konferenzgäste empfangen kann, und
das System ferner eine Benachrichtigung über eine laufende Konferenz an mindestens eine der Kommunikationsadressen für jeden der fehlenden Konferenzgäste senden kann.

8. System nach Anspruch 1, das ferner Folgendes umfasst:
eine Datenbank (36), in der eine Vielzahl von Konferenzprofilen gespeichert ist, wobei jedes geplante Konferenzprofil Folgendes identifiziert:
Terminplaninformationen, eine Vielzahl von Konferenzgästen (37) und für jeden der Konferenzgäste mindestens eine Kommunikationsadresse (38).

9. System nach Anspruch 8, das ferner Folgendes umfasst:
Mittel zum Auswählen eines der Konferenzprofile;
Mittel zum Identifizieren der Konferenzgäste für das ausgewählte Konferenzprofil;
Mittel zur Überwachung der Kommunikationssitzung, die für das ausgewählte Konferenzprofil eingerichtet wurde, und
Mittel zur Ermittlung der Kommunikationsadressen für fehlende Konferenzgäste aus dem Konferenzprofil.

10. Verfahren zum Verwalten einer laufenden Konferenz, das Folgendes umfasst:
Identifizierung einer Vielzahl von Konferenzgästen für eine geplante Konferenz, für die eine laufende Kommunikationssitzung eingerichtet wurde;
Überwachung der laufenden Kommunikationssitzung, die für die geplante Konferenz eingerichtet wurde;
Identifizierung eines oder mehrerer fehlender Konferenzgäste (14A-14C), die nicht an der laufenden Kommunikationssitzung teilnehmen;
Ermitteln einer oder mehrerer zugehöriger Kommunikationsadressen für jeden der fehlenden Konferenzgäste;
Präsentation mindestens einer Kontaktoption (50), die mit den Kommunikationsadressen verknüpft ist, für jeden der fehlenden Konferenzgäste;
Empfang einer Benachrichtigungsauswahl, die eine oder mehrere ausgewählte Kontaktoptionen anzeigt, und
Senden einer Benachrichtigung über eine laufende Konferenz zu den Kommunikationsadressen, die mit den ausgewählten Kontaktoptionen verknüpft sind.

11. Verfahren nach Anspruch 10, das ferner die Darstellung einer grafischen Benutzeroberfläche (40) umfasst, die für jeden der fehlenden Konferenzgäste die Kontaktoptionen (50) anzeigt, die mit der einen oder den mehreren identifizierten Kommunikationsadressen verknüpft sind.

12. Verfahren nach Anspruch 10, wobei die Darstellung die visuelle Anzeige von Symbolen umfasst, die die einzelnen Kontaktoptionen repräsentieren.

13. Verfahren nach Anspruch 10, das ferner die Ermittlung eines Anwesenheitsstatus für jeden der fehlenden Konferenzgäste umfasst, wobei jeder Anwesenheitsstatus eine Verfügbarkeit einer Netzwerkvorrichtung, die der Kommunikationsadresse für den fehlenden Konferenzgast zugeordnet ist, anzeigt und den Anwesenheitsstatus (54) für jeden der fehlenden Konferenzgäste anzeigt.

14. Verfahren nach Anspruch 10, das ferner für jeden der fehlenden Konferenzteilnehmer Folgendes umfasst:
Zugreifen auf eine Terminplanungssoftware für den fehlenden Konferenzgast, Ermitteln von Terminplaninformationen, die die geplanten Aktivitäten des Konferenzgasts anzeigen, und Darstellen der Terminplaninformationen.

15. Verfahren nach Anspruch 14, wobei die Terminplaninformationen Kalendereinträge aus einer im Handel erhältlichen Software-Anwendung umfassen.

16. Verfahren nach Anspruch 10, das ferner Folgendes umfasst:
Darstellen einer Option (58) zum Kontaktieren aller fehlender Konferenzgäste;
Empfangen einer Auswahl der Option zum Kontaktieren aller fehlender Konferenzgäste, und
Senden einer Benachrichtigung über eine laufende Konferenz an mindestens eine der Kommunikationsadressen für jeden der fehlenden Konferenzgäste.

17. Software zum Verwalten einer laufenden Konferenz, wobei die Software in computerlesbaren Medien ausgeführt ist und bei Ausführung ein Verfahren nach einem der Ansprüche 10 bis 16 durchführt.

## Revendications

1. Système (30) conçu pour la gestion d'une conférence en cours, comprenant :
un moyen pour identifier une pluralité d'invités à une conférence pour une conférence planifiée pour laquelle une séance de communication en cours a été établie ;
un moyen pour surveiller la séance de communication en cours établie pour la conférence planifiée ;
un moyen pour identifier un ou plusieurs invités absents (14A-14C) parmi les invités à la conférence, ne participant pas à la séance de communication en cours ;
un moyen pour déterminer, pour chacun des invités absents à la conférence, une ou plusieurs adresses de communication associées ;
un moyen pour présenter, pour chacun des invités absents à la conférence, au moins une option de contact (50) liée aux adresses de communication ;
un moyen pour recevoir une sélection de notification indiquant une ou plusieurs des options sélectionnées parmi les options de contact ; et
un moyen pour envoyer une notification de conférence en cours aux adresses de communication liées aux options de contact sélectionnées.

2. Système selon la revendication 1, le système pouvant en outre être mis en oeuvre pour présenter une interface graphique utilisateur (40) affichant, pour chacun des invités absents à la conférence, les options de contact (50) liées auxdites une ou plusieurs adresses de communication identifiées.

3. Système selon la revendication 2, dans lequel l'affichage comprend la présentation visuelle d'une pluralité d'icônes, chacune liée à une option sélectionnée parmi les options de contact.

4. Système selon la revendication 1, le système pouvant en outre être mis en oeuvre pour déterminer un état de présence pour chacun des invités absents à la conférence, chaque état de présence indiquant une disponibilité d'un dispositif de réseau associé à l'adresse de communication pour l'invité absent à la conférence, et présenter l'état de présence (54) pour chacun des invités absents à la conférence.

5. Système selon la revendication 1, le système pouvant en outre être mis en oeuvre, pour chacun des invités absents à la conférence, pour accéder à un logiciel de planification pour l'invité absent à la conférence, pour déterminer des informations de planification indiquant des activités planifiées pour l'invité à la conférence, et pour présenter les informations de planification.

6. Système selon la revendication 5, dans lequel les informations de planification comprennent des mentions figurant dans un calendrier qui proviennent d'une application logicielle disponible dans le commerce.

7. Système selon la revendication 1, caractérisé en ce qui :
le système peut en outre être mis en oeuvre pour présenter une option (58) consistant à contacter tous les invités absents à la conférence et pour recevoir une sélection de l'option consistant à contacter tous les invités absents à la conférence ; et
le système peut en outre être mis en oeuvre pour envoyer une notification de conférence en cours à au moins une des adresses de communication pour chacun des invités absents à la conférence.

8. Système selon la revendication 1, comprenant en outre :
une base de données (36) dans laquelle est conservée une pluralité de profils de conférence, chaque profil de conférence planifiée identifiant des informations de planification, une pluralité d'invités à la conférence (37) et, pour chacun des invités à la conférence, au moins une adresse de communication (38).

9. Système selon la revendication 8, comprenant en outre :
un moyen pour sélectionner un des profils de conférence ;
un moyen pour identifier les invités à la conférence pour le profil de conférence sélectionné ;
un moyen pour surveiller la séance de communication établie pour le profil de conférence sélectionné ; et
un moyen pour déterminer les adresses de communication pour les invités absents à la conférence à partir du profil de conférence.

10. Procédé conçu pour la gestion d'une conférence en cours, consistant à :
identifier une pluralité d'invités à une conférence pour une conférence planifiée pour laquelle une séance de communication en cours a été établie ;
surveiller la séance de communication en cours établie pour la conférence planifiée ;
identifier un ou plusieurs invités absents (14A-14C) parmi les invités à la conférence, ne participant pas à la séance de communication en cours ;
déterminer, pour chacun des invités absents à la conférence, une ou plusieurs adresses de communication associées ;
présenter, pour chacun des invités absents à la conférence, au moins une option de contact (50) liée aux adresses de communication ;
recevoir une sélection de notification indiquant une ou plusieurs des options sélectionnées parmi les options de contact ; et
envoyer une notification de conférence en cours aux adresses de communication liées aux options de contact sélectionnées.

11. Procédé selon la revendication 10, consistant en outre à présenter une interface graphique utilisateur (40) affichant, pour chacun des invités absents à la conférence, les options de contact (50) liées auxdites une ou plusieurs adresses de communication identifiées.

12. Procédé selon la revendication 10, dans lequel la présentation comprend l'affichage visuel d'icônes représentant chacune des options de contact.

13. Procédé selon la revendication 10, consistant en outre à déterminer un état de présence pour chacun des invités absents à la conférence, chaque état de présence indiquant une disponibilité d'un dispositif de réseau associé à l'adresse de communication pour l'invité absent à la conférence, et présenter l'état de présence (54) pour chacun des invités absents à la conférence.

14. Procédé selon la revendication 10, consistant en outre, pour chacun des invités absents à la conférence, à accéder à un logiciel de planification pour l'invité absent à la conférence, à déterminer des informations de planification indiquant des activités planifiées pour l'invité à la conférence, et à présenter les informations de planification.

15. Procédé selon la revendication 14, dans lequel les informations de planification comprennent des mentions figurant dans un calendrier qui proviennent d'une application logicielle disponible dans le commerce.

16. Procédé selon la revendication 10, consistant en outre à :
présenter une option (58) consistant à contacter tous les invités absents à la conférence ;
recevoir une sélection de l'option consistant à contacter tous les invités absents à la conférence ; et
envoyer une notification de conférence en cours à au moins une des adresses de communication pour chacun des invités absents à la conférence.

17. Logiciel conçu pour la gestion d'une conférence en cours, le logiciel étant incorporé dans un support lisible par un ordinateur et, quand il est exécuté, pouvant être mis en oeuvre pour réaliser un procédé selon l'une quelconque des revendications 10 à 16.
